# EUROPÄISCHE PATENTSCHRIFT

(11) **EP 1 929 622 B1**
(45) Veröffentlichungstag und Bekanntmachung des Hinweises auf die Patenterteilung: **12.01.2011**
(21) Anmeldenummer: 06793330.9
(22) Anmeldetag: 07.09.2006
(51) Int. Cl.: H02P 6/14

(54) **VERFAHREN ZUR STROMVERSORGUNG EINES ÜBER EINE HALBLEITER-LEISTUNGSENDSTUFE ELEKTRONISCH KOMMUTIERBAREN GLEICHSTROMMOTORS**
METHOD FOR SUPPLYING ELECTRICAL POWER TO A DC MOTOR WHICH CAN BE COMMUTATED ELECTRONICALLY VIA A SEMICONDUCTOR POWER OUTPUT STAGE
PROCEDE POUR ALIMENTER EN ENERGIE UN MOTEUR A COURANT CONTINU POUVANT ETRE COMMUTE ELECTRONIQUEMENT PAR L'INTERMEDIAIRE D'UN TERMINAL A SEMI-CONDUCTEURS

(30) Priorität: 23.09.2005 DE 102005045401
(43) Veröffentlichungstag der Anmeldung: 11.06.2008
(73) Patentinhaber: ROBERT BOSCH GMBH, 70442 Stuttgart (DE)
(72) Erfinder: WILHARM, Torsten, 77833 Ottersweier (DE)
(86) Internationale Anmeldenummer: PCT/EP2006/066135
(87) Internationale Veröffentlichungsnummer: WO 2007/033912

(56) Entgegenhaltungen:
- DE-A1- 10 127 670
- JP-A- 2000 152 681
- JP-A- 2003 341 534
- SAFI, S.K., ACARNLEY P.P., JACK A.G.: "Analysis and simulation of the high-speed torque performance of brushless DC motor drives" IEE PROC.-ELECTR. POWER APPL., Bd. 142, Nr. 3, Mai 1995 (1995-05), Seiten 191-200, XP002410189

## Beschreibung

### Stand der, Technik

Die Erfindung geht aus von einem Verfahren zur Stromversorgung eines über eine Halbleiter-Leistungsendstufe elektronisch kommutierbaren, vorzugsweise dreiphasigen Gleichstrommotors, wie es beispielsweise in der DE 102 47 900 A1 beschrieben ist. Diese Druckschrift offenbart ein Verfahren zur Stromversorgung eines elektronisch kommutierbaren Gleichstrommotors mit einer Steuerung für die Strangströme des Motors, welche als Steuersignale unter anderem die Signale eines Stromsensors in einer gemeinsamen Zuleitung der Halbleiterschalter der Leistungsendstufe sowie Signale einer Sensorvorrichtung für die Rotorposition erhält. Die Stromversorgung des Motors erfolgt dabei entweder in Form einer Blockbestromung mit Stromblöcken von jeweils 120°el oder alternativ mit einer sinusförmigen Strombeaufschlagung mit einer Halbwellendauer von 180°el. Hierbei erlaubt die Anwendung der 120°-Blockbestromung zwar den Einsatz eines einfachen und preiswerten Steuergerätes, die Ausnutzung des Motors ist jedoch niedrig. Eine sinusförmige Bestromung erfordert eine aufwendige Berechnung der jeweiligen Schaltzeitpunkte und Stromhöhen sowie eine sehr aufwendige Sensorik für eine exakte Erfassung der Rotorposition.

Die Vorkommutierung des Stromes und die Anwendung des ungepulsten Betriebs durch Blockkommutierung des Umrichters zur Erhöhung der Spannung und zur Annäherung des Stromes and die Sinusform ist Gegenstand des Dokuments DE10127670.

Die drehzahlabhängige Vorkommutierung des Stromes zur Erweiterung des Drezahlbereichs bei vorgegebener Zwischenkreisspannung wird z.B. in den Dokumenten JP2003341534 und JP2000152681 behandelt.

Der Erfindung liegt die Aufgabe zugrunde, ein Verfahren zur Stromversorgung eines elektronisch kommutierbaren Gleichstrommotors, insbesondere eines dreiphasigen Gleichstrommotors, anzugeben, welches mit geringem Schaltungs- und Rechenaufwand eine Steigerung der Leistungsdichte und gleichzeitig eine Senkung der Drehmomentwelligkeit eines blockbestromten, elektronisch kommutierbaren Motors gestattet. Die Kommutierungszeitpunkte sollen dabei direkt durch eine einfache Sensoranordnung ausgelöst werden ohne aufwendige Berechnung der Kommutierungszeitpunkte durch die Steuerungsanordnung. Diese Aufgabe wird gelöst durch die kennzeichnenden Merkmale des Anspruches 1, indem die Bestromung des Motors stufenweise variabel gestaltet wird. Hierdurch erreicht man mit geringem Mehraufwand gegenüber einer einfachen 120°-Blockbestromung ohne Vorkommutierung eine erhebliche Verbesserung der Motorausnutzung sowie eine flexiblere Ansteuerung zur Senkung der Drehmomentwelligkeit.

Als besonders zweckmäßig hat es sich erwiesen, wenn der Motor in unterschiedlichen Drehzahlbereichen mit last- und drehzahlabhängig verschiedenen Bestromungsmustern allein durch Auswertung der Sensorsignale betrieben wird, ohne dass eine Berechnung der Kommutierungszeitpunkte notwendig ist. Bei dreiphasigen Motoren mittlerer Baugröße mit einer Stromaufnahme zwischen etwa 20 A und 200 A, wie sie beispielsweise in großer Stückzahl als Stell- oder Lüftermotoren in Kraftfahrzeugen verwendet werden, hat es sich hierbei als besonders vorteilhaft erwiesen, wenn in einem unteren Drehzahlbereich Stromblöcke mit einer Länge von 150°el und einem Zündwinkel von 0 bis 30°el, vorzugsweise von +15°el, in einem mittleren Drehzahlbereich Stromblöcke mit einer Blocklänge von 180°el und einem Zündwinkel von -30 bis 0°el, vorzugsweise von -15°el, sowie in einem oberen Drehzahlbereich Stromblöcke mit einer Blocklänge von 180°el und einem Zündwinkel von -30 bis -60°el, vorzugsweise von -45°el, verwendet werden, jeweils gegenüber dem Nulldurchgang der induzierten Spannung E.

Als Positionsgeber dienen dabei vorzugsweise digitale Hallsensoren, welche relativ preiswert sind und ausreichend genaue Positionssignale liefern. Zur Verringerung der Drehmomentwelligkeit ist es zweckmäßig, in den Bereichen mit dreiphasigem Stromfluss zusätzlich die Höhe des Stromes innerhalb der Stromblöcke zu verändern, derart, dass sich bei unterschiedlich hohen Stromblöcken im zwei-, beziehungsweise dreiphasigen Bestromungsbetrieb etwa gleiche Maximalwerte der erzielten Drehmomente einstellen.

Weitere Einzelheiten und vorteilhafte Ausgestaltungen des erfindungsgemäßen Verfahren ergeben sich aus den Unteransprüchen und aus der Beschreibung der Ausführungsbeispiele.

### Die Zeichnungen zeigen

in Figur 1 eine Prinzipschaltung einer erfindungsgemäßen Stromversorgung eines elektronisch kommutierbaren Elektromotors,

in Figur 2 Beispiele unterschiedlicher Bestromungsmuster für eine Phase eines elektronisch kommutierten, dreiphasigen Elektromotors mit unterschiedlichen Blocklängen und Blockformen sowie unterschiedlichen Zündwinkeln gegenüber der induzierten Spannung E,

in Figur 3 Beispiele für den Verlauf der unterschiedlichen Drehmomente bei Beaufschlagung eines dreiphasigen Motors mit unterschiedlichen Bestromungsmustern in unterschiedlichen Drehzahlbereichen und

in Figur 4 ein Beispiel für den Verlauf der Drehmomente eines dreiphasigen, elektronisch kommutierten Gleichstrommotors bei Beaufschlagung mit 150°-Stromblöcken mit gleich bleibender und alternierender Stromhöhe.

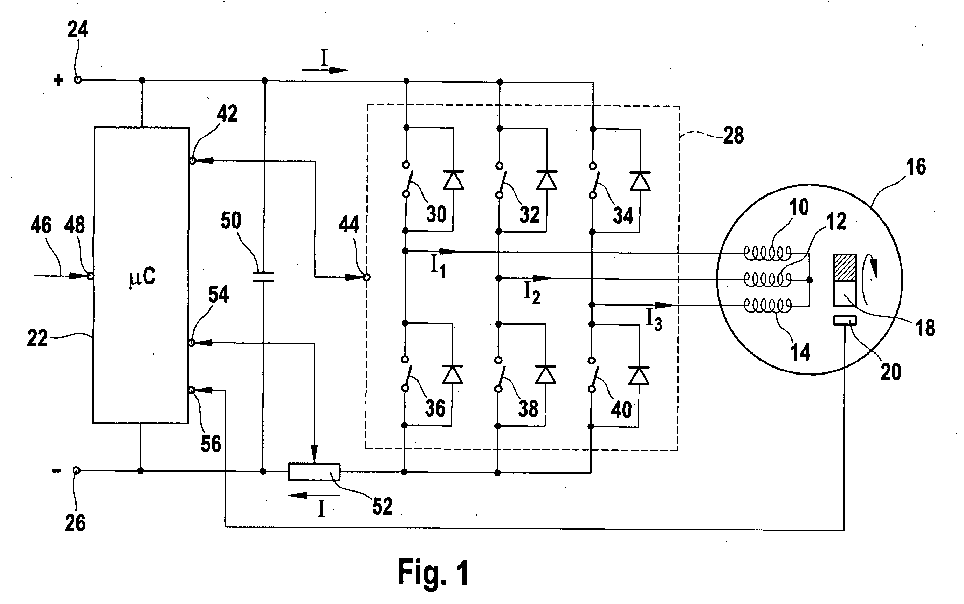

In Figur 1 sind mit 10, 12 und 14 die in Stern geschalteten Wicklungen eines dreiphasigen, elektronisch kommutierbaren Gleichstrommotors 16 bezeichnet, die mit einem permanentmagnetischen Rotor 18 zusammenwirken. Die jeweilige Stellung des Rotors wird durch eine Sensorvorrichtung 20 überwacht, welche die Signale zur Rotorposition an eine als Mikrocontroller ausgebildete Steuereinheit 22 liefert. Die Sensorvorrichtung ist in bekannter Weise mit wenigstens einem Hall-Element je Phase ausgebildet.und liefert mindestens zwei Rotorpositionssignale je Phase bei jeder elektrischen Umdrehung des Rotors. Die Hallsensoren werten entweder das Feld des Arbeitsmagneten oder eines separaten Sensormagneten gleicher Polzahl aus und sind so angeordnet, dass bei einem dreiphasigen Motor aus den drei Signalen (3 BIT) sechs verschiedene Rotorpositionen eindeutig abgeleitet werden können, zweckmäßigerweise um 120°el. versetzt.

Die Versorgungsspannung für den Motor 16 und die Steuereinheit 22 liefert ein Gleichspannungsnetz mit einem Pluspol 24 und einem Minuspol 26, an welches die Motorwicklungen über einen Wechselrichter 28 anschließbar sind. Der Wechselrichter 28 ist in bekannter Weise in Halbbrückenschaltung (B6-Schaltung) aufgebaut mit Halbleiterschaltern 30, 32 und 34 auf der positiven Seite und Halbleiterschaltern 36, 38 und 40 auf der negativen Seite des Gleichspannungsnetzes, wobei alle Schalter jeweils durch eine nicht näher bezeichnete Freilaufdiode überbrückt sind. Der Speisestrom 11 für die Wicklung 10 wird zwischen den Schaltern 30 und 36 abgegriffen, der Speisestrom 12 für die Wicklung 12 zwischen den Schaltern 32 und 38 und der Speisestrom I3 für die Wicklung 14 zwischen den Schaltern 34 und 40. Die Ansteuerung des Wechselrichters 28 durch die Steuereinheit 22 ist schematisch als Pfeil vom Ausgang 42 der Steuereinheit zum Steuereingang 44 des Wechselrichters dargestellt. Die Motorsteuerung insgesamt ist vorgegeben durch ein Sollwertsignal 46 am Eingang 48 der Steuereinheit 22, welche ihre Versorgungsspannung ebenfalls von dem Gleichspannungsnetz 24, 26 bezieht. Zur Verbesserung der elektromagnetischen Verträglichkeit ist das Gleichspannungsnetz noch durch einen Zwischenkreiskondensator 50 überbrückt.

Die Messung des gesamten Speisestromes I für den Motor 16 erfolgt mittels eines Shunts 52, welcher in die Verbindungsleitung zum Minuspol 26 des Gleichspannungsnetzes eingeschaltet ist und das für die Steuerung benötigte Stromsignal in bekannter Weise zum Beispiel über einen Verstärker und einen A/D-Wandler an einen Eingang 54 der Steuereinheit 22 liefert. Der Zwischenkreisstrom I wird in geeigneter Weise auf den von der Steuereinheit 22 vorgegebenen Sollwert geregelt. Dies kann beispielsweise durch Begrenzung des Maximalstromes geschehen. Dabei wird beim Erreichen der Stromgrenze der entsprechende Halbleiterschalter ausgeschaltet und zum Ende des jeweiligen Taktes wieder eingeschaltet.

Die von der Sensorvorrichtung 20 erzeugten Rotorpositionssignale liegen an einem Eingang 56 der Steuereinheit 22 an. Im Einzelnen ist das Ansteuerverfahren für die Stromversorgung des Motors 16 anhand der Diagramme in den folgenden Figuren näher erläutert. Hierbei handelt es sich um eine modifizierte, drehzahlabhängig variable Blockbestromung, welche mit geringem Mehraufwand gegenüber der bekannten Blockbestromung mit einer festen Blocklänge von 120°el eine deutliche Steigerung der Motorleistung bei gleichzeitiger Verringerung der Drehmomentwelligkeit ermöglicht. Dieser Mehraufwand besteht insbesondere in einer Sensorik, die zur Verdopplung der Winkelauflösung einen weiteren Sensor benötigt, also bei 12 benötigten Positionen 4 Sensoren (4 BIT), während bei 6 benötigten Positionen nur 3 Sensoren (3 BIT) erforderlich sind.

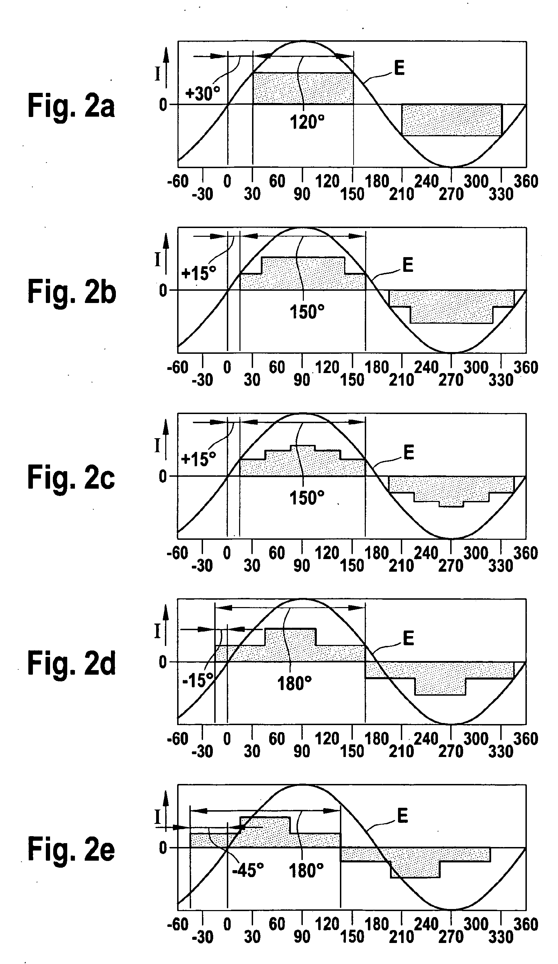

In Figur 2 sind zur Verbesserung der Übersichtlichkeit verschiedene Bestromungsmuster jeweils nur für eine einzelne Phase dargestellt. Es zeigen:

Figur 2a eine herkömmliche Blockbestromung mit einer Blocklänge von 120°el und einem Zündwinkel von +30°el, Figur 2b eine im unteren Drehzahlbereich vorteilhafte erfindungsgemäße Blockbestromung mit einer Blocklänge von 150°el und einem Zündwinkel von +15°el, welche nach jeweils 30°el zwischen einer zweiphasigen und einer dreiphasigen Bestromung wechselt.

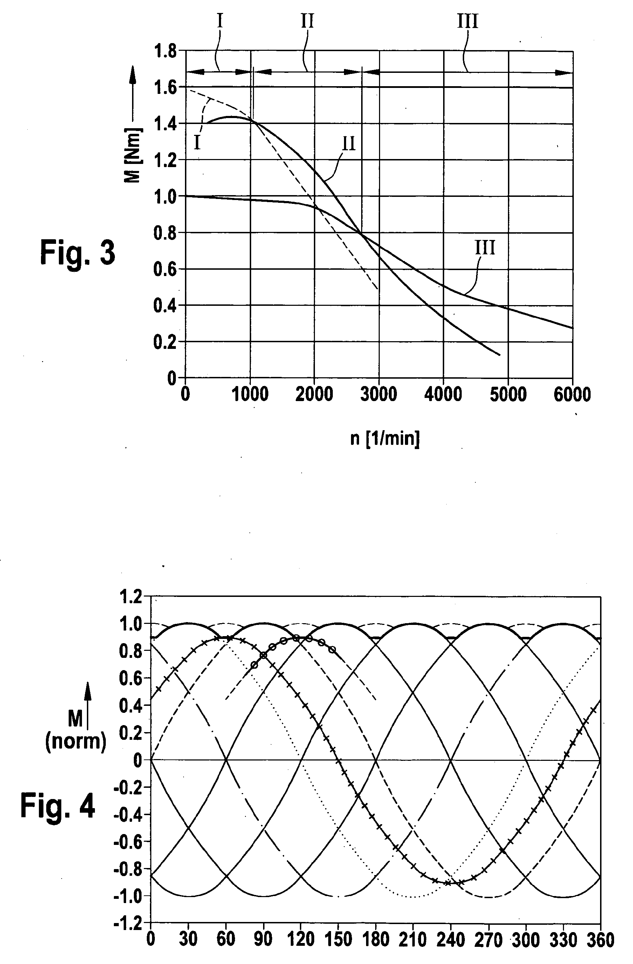

Figur 2c zeigt ein erfindungsgemäßes Bestromungsmuster entsprechend Figur 2b, wobei jedoch die Bestromungshöhe im mittleren, dreiphasigen Bereich des Blockes zusätzlich angehoben ist zur Verringerung der Drehmomentwelligkeit. Die Auswirkung dieser Stromerhöhung ist anhand der Diagramme in Figur 4 näher.erläutert.

Figur 2d zeigt ein erfindungsgemäßes Bestromungsmuster mit einem 180°el-Stromblock, welcher einen Zündwinkel von -15°el gegenüber dem Nulldurchgang der induzierten Spannung E aufweist. Diese Bestromungsart findet Anwendung zur Leistungssteigerung im mittleren Drehzahlbereich des Motors, während die Bestromungsmuster entsprechend den Figuren 2b oder 2c im unteren Drehzahlbereich Vorteile bringen, wie dies anhand von Figur 3 noch näher erläutert wird.

Das Bestromungsmuster gemäß Figur 2e findet Anwendung im oberen Drehzahlbereich des Motors. Hierbei handelt es sich um eine 180°el-Blockbestromung mit einem Zündwinkel von -45°el gegenüber dem Nulldurchgang der induzierten Spannung E, welche eine deutliche Drehzahlerhöhung ermöglicht.

Figur 3 zeigt den unterschiedlichen Verlauf der Drehmomente des Motors in Abhängigkeit von der Drehzahl, wobei den Kurven I, II und III die oben beschriebenen, unterschiedlichen Bestromungsmuster zugrunde liegen. Die Bestromung im Bereich des Kurvenabschnittes I entspricht den Figuren 2b oder 2c, die Bestromung des Kurvenabschnittes II der Abbildung in Figur 2d und die Bestromung des Kurvenabschnittes III der Abbildung in Figur 2e. Aus den verschiedenen Kurven ist deutlich zu erkennen, dass durch die unterschiedlichen Bestromungsmuster in den verschiedenen Drehzahlbereichen eine deutliche Drehmomenterhöhung und Drehzahlsteigerung erreichbar ist. Die Ursache hierfür liegt darin, dass mit steigender Drehzahl der Blindwiderstand des Motors steigt und dementsprechend der Motorstrom in seiner Phasenlage der Spannung nacheilt. Dies kann durch früheres Einschalten des Stromes in Form einer Vorkommutierung kompensiert werden, wodurch die Leistung des Motors ansteigt. Außerdem kann durch die Vorkommutierung der Motorstrom schneller aufgebaut werden, da die entgegenwirkende induzierte Spannung zum Einschaltzeitpunkt des Stromes kleiner ist. Zusätzlich kann der Motorstrom am Blockende auch schneller abgebaut werden, da zu diesem Zeitpunkt die entgegenwirkende induzierte Spannung größer ist und die Stromabnahme beschleunigt. Hierdurch vergrößert sich insgesamt die zur Verfügung stehende Strom-Zeit-Fläche und damit die Leistung des Motors.

Eine weitere vorteilhafte Auswirkung der erfindungsgemäßen Bestromung, welche ebenfalls zu dem in Figur 3 dargestellten Drehmomentverlauf beiträgt, ist dadurch bedingt, dass die Bestromungsblöcke ein Magnetfeld erzeugen, welches dem Feld des Permanentmagneten im Rotor 18 des Motors 16 teilweise entgegenwirkt. Dieser Effekt kann bei hohen Drehzahlen vorteilhaft genutzt werden, um den Motor trotz der hohen entgegenwirkenden induzierten Spannung noch betreiben zu können.

Figur 4 zeigt in normierter Darstellung beispielhaft die Verwendung einer 150°el-Bestromung mit einem Zündwinkel von 15°el entsprechend der Drehmomentkurve I in Figur 3. Hierbei entsteht ein zwölfpulsiger Drehmomentverlauf, wodurch die Drehmomentwelligkeit im unteren Drehzahlbereich gesenkt wird. Das resultierende zwölfpulsige Drehmoment ist mit einer dickeren durchgehenden Linie dargestellt. Dabei werden zwei, beziehungsweise drei Phasen, jeweils nach 30°el abwechselnd bestromt. Der zu regelnde Strom ist immer der volle Zwischenkreisstrom, welcher in den dreiphasig bestromten Abschnitten auf zwei Phasen aufgeteilt ist und dort jeweils in halber Höhe fließt. Durch die Aufteilung des Stromes auf zwei Phasen ist das resultierende maximale Drehmoment im dreiphasigen Bereich etwas niedriger als in den Abschnitten, wo der volle Phasenstrom in zwei Phasen fließt. Durch Anheben der Stromstärke im dreiphasigen Betrieb kann jedoch das maximale Drehmoment im dreiphasigen Betrieb auf die Höhe des Drehmomentes im zweiphasigen Betrieb angehoben werden, wie dies in Figur 4 durch den gestrichelten Verlauf der Drehmomentkennlinie dargestellt ist. Hierdurch wird die Drehmomentwelligkeit weiter gesenkt. Im dreiphasigen Betrieb sind dabei die Halbleiter-Schalter von zwei Phasen parallel geschaltet und somit die Stromaufnahme und die Erwärmung dieser Schalter bei gleicher Leistungsabgabe reduziert. Hierin besteht ein weiterer Vorteil des erfindungsgemäßen Verfahrens.

Entsprechend dem in Figur 4 dargestellten zwölfpulsigen Drehmomentverlauf für den unteren Drehzahlbereich mit einer 150°el-Blockbestromung mit wahlweise alternierender Stromhöhe ergeben sich in gleichartiger Weise der Drehmomentverlauf bei einer 180°el-Blockbestromung mit einem Zündwinkel von -15°el im mittleren Drehzahlbereich und mit einem Zündwinkel von -45°el im oberen Drehzahlbereich entsprechend den Kurven II und III in Figur 3. Auf die separate Darstellung dieser Drehmomentverläufe in der Zeichnung kann daher verzichtet werden. Der Zündwinkel für den Einsatz der Blockbestromung ergibt sich jeweils aus der Winkeldifferenz zwischen der positiven Flanke des Stromes I, bezogen auf den positiven Nulldurchgang der induzierten Spannung E. Der Winkel zählt positiv, wenn die Stromflanke zeitlich dem Spannungsnulldurchgang nachfolgt.

## Patentansprüche

1. Verfahren zur Stromversorgung eines über eine Halbleiter-Leistungsendstufe elektronisch kommutierbaren, dreiphasigen Gleichstrommotors (16), welcher von einer Steuereinheit (22) blockweise entsprechend den Signalen eines Rotorlagegebers (20) bestromt wird, wobei die Bestromung des Motors (16) stufenweise variabel gestaltet ist, indem Stromblöcke (I) drehzahlabhängig und/oder lastabhängig in ihrer Höhe und/oder in ihrer Länge und/oder in ihrem Zündwinkel gegenüber dem Verlauf einer induzierten Spannung (E) veränderbar sind, **dadurch gekennzeichnet, dass** der Motor (16) in einem unteren Drehzahlbereich (I) mit einer Blocklänge von 150°el und einem Zündwinkel von 0 bis 30°el, in einem mittleren Drehzahlbereich (II) mit einer Blocklänge von 180°el und einem Zündwinkel von -30 bis 0°el und/oder in einem oberen Drehzahlbereich (III) mit einer Blocklänge von 180°el und einem Zündwinkel von -30 bis -60°el gegenüber dem Nulldurchgang der induzierten Spannung (E) bestromt wird.

2. Verfahren nach Anspruch 1, **dadurch gekennzeichnet, dass** der Zündwinkel im unteren Drehzahlbereich +15°el, im mittleren Drehzahlbereich -15°el und im oberen Drehzahlbereich -45°el beträgt.

3. Verfahren nach einem der vorhergehenden Ansprüche, **dadurch gekennzeichnet, dass** die Höhe des Stromes (I) innerhalb eines Blockes im Sinne einer Verringerung der Drehmomentwelligkeit des Motors (16) veränderbar ist.

4. Verfahren nach einem der vorhergehenden Ansprüche, **dadurch gekennzeichnet, dass** die Größe und/oder die Lage der Stromblöcke (I) durch eine Sensorvorrichtung (20) vorgebbar sind.

5. Verfahren nach Anspruch 3, **dadurch gekennzeichnet, dass** die Größe und/oder die Lage der Stromblöcke (I) durch digitale HallSensoren vorgebbar sind.

## Claims

1. Method for supplying electrical power to a three-phase DC motor (16) which can be commutated electronically via a semiconductor power output stage and is energized in blocks by a control unit (22) in accordance with the signals from a rotor position sensor (20), the energization of the motor (16) being gradually variable by virtue of the height and/or length and/or trigger angle of current blocks (I) being able to be changed, on the basis of the speed and/or load, in comparison with the profile of an induced voltage (E), **characterized in that** the motor (16) is energized in a lower speed range (I) with a block length of 150° electrical and a trigger angle of 0 to 30° electrical, in a middle speed range (II) with a block length of 180° electrical and a trigger angle of -30 to 0° electrical and/or in an upper speed range (III) with a block length of 180° electrical and a trigger angle of -30 to -60° electrical with respect to the zero crossing of the induced voltage (E).

2. Method according to Claim 1, **characterized in that** the trigger angle is + 15° electrical in the lower speed range, -15° electrical in the middle speed range and -45° electrical in the upper speed range.

3. Method according to one of the preceding claims, **characterized in that** the magnitude of the current (I) inside a block can be changed in order to reduce the torque ripple of the motor (16).

4. Method according to one of the preceding claims, **characterized in that** the size and/or position of the current blocks (I) can be predefined by a sensor apparatus (20).

5. Method according to Claim 3, **characterized in that** the size and/or position of the current blocks (I) can be predefined by digital Hall sensors.

## Revendications

1. Procédé d'alimentation en courant d'un moteur (16) à courant continu triphasé, commuté électroniquement par l'intermédiaire d'un étage final de puissance à semi-conducteur et alimenté en courant par blocs à l'aide d'une unité de commande (22) en correspondance aux signaux d'une sonde (20) de position du rotor,
l'alimentation en courant du moteur (16) étant configurée de manière à pouvoir être variée par pas en modifiant la hauteur et/ou la longueur et/ou l'angle d'allumage des blocs de courant (I) en fonction du régime de rotation et/ou de la charge par rapport à l'évolution d'une tension (E) induite,
**caractérisé en ce que**
le moteur (16) est alimenté en courant dans une plage basse (I) de régime de rotation en blocs d'une longueur de 150° électriques et à un angle d'allumage de 0 à 30° électriques, dans une plage médiane (II) de régime de rotation en blocs d'une longueur de 180° électriques et à un angle d'allumage de -30 à 0° électriques et/ou dans une plage haute (III) de régime de rotation en blocs d'une longueur de 180° électriques et à un angle d'allumage de -30 à -60° électriques par rapport au passage par zéro de la tension induite (E).

2. Procédé selon la revendication 1, **caractérisé en ce que** l'angle d'allumage est de +15° électriques dans la plage basse des régimes de rotation, de -15° électriques dans la plage médiane de régime de rotation et de -45° électriques dans la plage haute de régime de rotation.

3. Procédé selon l'une des revendications précédentes, **caractérisé en ce que** le niveau de courant (I) à l'intérieur d'un bloc peut être modifié dans le sens d'une diminution de la composante ondulatoire du couple de rotation du moteur (16).

4. Procédé selon l'une des revendications précédentes, **caractérisé en ce que** la grandeur et/ou la position des blocs de courant (I) peut (peuvent) être prédéterminée(s) par un dispositif de détection (20).

5. Procédé selon la revendication 3, **caractérisé en ce que** la taille et/ou la position des blocs de courant (I) peut (peuvent) être prédéterminée(s) par des détecteurs numériques de Hall.
